# EUROPEAN PATENT SPECIFICATION

(11) **EP 4 076 111 B1**
(45) Date of publication and mention of the grant of the patent: **25.09.2024**
(21) Application number: 20841771.7
(22) Date of filing: 18.12.2020
(51) Int. Cl.: G05B 19/418, A47J 36/00, A47J 36/32, G05B 15/02

(54) **SYSTEM FOR CONTROLLING THE OPERATION OF KITCHEN APPLIANCES**
SYSTEM ZUR STEUERUNG DES BETRIEBS VON KÜCHENGERÄTEN
SYSTÈME DE CONTRÔLE DU FONCTIONNEMENT DES APPAREILS DE CUISINE

(30) Priority: 18.12.2019 PT 2019116001; 20.12.2019 EP 19219153
(43) Date of publication of application: 26.10.2022
(73) Proprietor: Modelo Continente Hipermercados, S.A., 4464-503 Senhora da Hora (PT)
(72) Inventor: FARIA ROCHA, Duarte Nuno, 3800-423 Aveiro (PT)
(74) Representative: do Nascimento Gomes, Rui
(86) International application number: PCT/IB2020/062200
(87) International publication number: WO 2021/124260

(56) References cited:
- EP-A1- 3 206 095
- EP-B1- 3 206 096
- WO-A1-2011/069833
- AU-A1- 2010 330 199
- US-A1- 2017 224 148
- US-B1- 6 975 910

## Description

### FIELD OF THE INVENTION

The present invention is enclosed in the area of kitchen appliances. In particular, the present invention relates to a centralized control system designed to manage the operation of the kitchen appliances thereto connected.

### PRIOR ART

Many solutions exist in the art for providing automation and control of home appliances in general. In the particular domain of the kitchen appliances, several systems are already known which enable a user to control a kitchen appliance through a communication hub.

An example of such kind of approach is given by document CN101408768A, wherein the communication hub is implemented through a radio frequency wireless network for connecting a remote-control terminal, an embedded platform and a kitchen appliance to be controlled. Based on the proposed architecture, an user is then allowed to control a kitchen appliance connected to the network through the embedded platform which actuates the remote control terminal that, in its turn, is responsible for programming the operation of the kitchen appliance according to the instructions set by the user.

Document WO2011/069833A1 discloses a kitchen appliance adapted to support the selection of a recipe for the user, wherein a plurality of recipes is stored in the kitchen appliance or in a device in data exchange with the kitchen appliance. In an alternative configuration, the kitchen appliance may have a random generator and a recipe can be selected as a suggestion by the random generator.

This type of network-based control systems centralizes the control operations in the kitchen appliance or in devices which are external to the kitchen environment, which are only programmed to react upon a reception of an input command from a user, not being able to provide an autonomous, integrated and prioritized control between all the kitchen appliances connected to the network.

Document US6975910B1 discloses a method for managing an electronic cookbook wherein a selection of electronic recipes that are preparable at a particular home base are selected according to estimated preparation and cooking times that satisfy designated meal preparation time constraints. However, this document is silent is respect of how to perform synchronization between kitchen apparatus in the context of a multi-device kitchen environment.

Document US20170224148A1 discloses a control system for synchronizing food processing steps performed by a multi-function cooking apparatus with food processing steps performed by one or more remote kitchen appliances. It includes a recipe program interface for accessing a recipe program on a data storage device wherein the recipe program is configured to be executed by the cooking apparatus and has internal instructions configured to control functions of the cooking apparatus for performing food processing steps thereon, and has at least one external instruction for a remote food processing step performed by a particular remote kitchen appliance. However, the proposed control system does not implement a priority mechanism in the management of communication between the cooking apparatus and all the remote kitchen appliances, which does not allow an efficient and synchronized management of the co-operation between multiple machines, each executing the same or a different cooking recipe.

Therefore, the known solutions are silent regarding an efficient control of the operation of a kitchen appliance as a function of the operative status of the other kitchen appliances of the network in the context of the co-operation between said kitchen appliances, for the purpose of implementing a cooking recipe.

### SUMMARY OF THE INVENTION

It is therefore an object of the present invention to provide a controllable interoperability environment between a kitchen machine and a set of kitchen equipment connected by means of a communications network, which would allow that the operation of one of them be influenced by the operative status of others.

The object is achieved by a system according to claim 1 with useful embodiments being defined in dependent claims 2-8.

In an advantageous configuration of the present invention, the system comprises an adaptor module connected to a kitchen equipment which is programmed to collect operative data from said kitchen equipment, and an operative engine, embedded in the kitchen machine being configured to program the operation of its hardware elements according to at least one kitchen equipment's operative data transmitted by the respective adaptor module.

In another advantageous configuration, the kitchen appliances of the system work according to automatic cooking programs to be select for operation in the kitchen machine. Such automatic cooking programs comprise a set of instructions that are performed either by the kitchen machine hardware elements either by the kitchen equipment of the network. In this context, the execution of the referred set of instructions in each kitchen appliance is dependent on the continuous monitoring of each's operative status.

### DESCRIPTION OF FIGURES

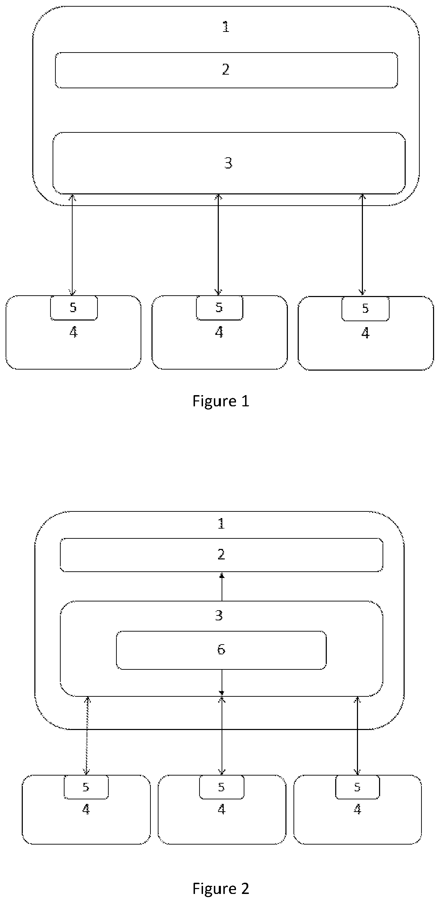

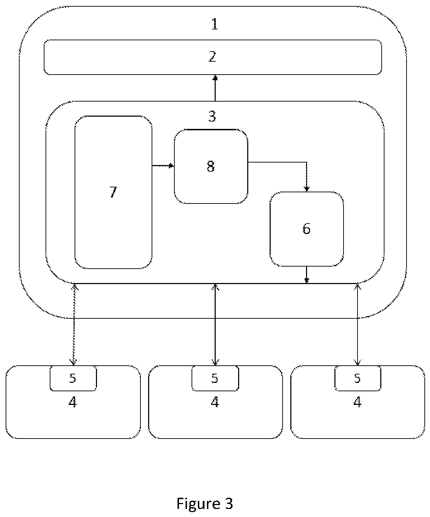

Figure 1- representation of the main embodiment of system of the present invention, wherein the reference signs represent:
   1 - Kitchen machine;
   2 - Kitchen machine hardware elements;
   3 - operation engine;
   4 - kitchen equipment;
   5 - adaptor module.
Figure 2 - representation of an alternative embodiment of system of the present invention, wherein the reference signs represent:
   1 - Kitchen machine;
   2 - Kitchen machine hardware elements;
   3 - operation engine;
   4 - kitchen equipment;
   5 - adaptor module;
   6 - programmer module
Figure 3 - representation of an alternative embodiment of system of the present invention, wherein the reference signs represent:
   1 - Kitchen machine;
   2 - Kitchen machine hardware elements;
   3 - operation engine;
   4 - kitchen equipment;
   5 - adaptor module;
   6 - programmer module;
   7 - scheduler module;
   8 - Automatic cooking program's list.

### DETAILED DESCRIPTION

The more general and advantageous configurations of the present invention are described in the Summary of the invention. Such configurations are detailed below in accordance with other advantageous and/or preferred embodiments of implementation of the present invention.

In a preferred embodiment of the system for controlling the operation of kitchen appliances of the present invention, it comprises at least one kitchen equipment (4), and at least one kitchen machine (1) connected to said at least one kitchen equipment (4) by means of wireless communication network. In the context of the present application, kitchen appliances should be understood as being either a set of kitchen equipment (4) or a set of kitchen machines (1) or any combination of those two. By kitchen equipment (4) one should refer to any equipment, other than a kitchen machine (1), that can be used for heating and/or cooling food ingredients during a cooking process. Preferably one may refer to a refrigerator, a stove, a microwave, an oven or a coffee machine, for example. On the other hand, a kitchen machine (1) is a device electrically ran and comprised by i.) a mixing cup, ii.) mixing means provided in the mixing cup, iii.) a base station suitable for coupling of the mixing cup and which thereby is able to provide motion to the mixing means and iv.) heating and/or cooling means of the mixing cup.

In the preferred embodiment of the present invention, the system comprises an adaptor module (5) which is connected to each kitchen equipment (4) to be controlled. Said adaptor (5) is programmed to collect operative data from the respective kitchen equipment (4) for the purpose of continuously monitoring the part of the cooking process to be executed by said kitchen equipment (4). The adaptor module (5) should be installed in a way to allow the monitoring of the operative parameters of a kitchen equipment (4), such as its temperature of operation and/or the period of operation. For that purpose, the adaptor module (5) may be positioned inside the kitchen equipment (4) or may be connected to it by means of a data peripheral port. Yet in the preferred embodiment of the invention, the kitchen machine (1) further comprises an operation engine (3). Such operation engine (3) is comprised by processing means configured to program the operation of the kitchen machine hardware elements (2) ii.) to iv.) according to at least one kitchen equipment's operative data transmitted by the respective adaptor module (5). The communication between a kitchen machine (1), in particular its operation engine (3), and the adaptor modules (5) is provided by means of a wireless communication network operating based on standards of a wireless personal area network or of a wireless local network or of a wireless wide area network.

In another embodiment of the present invention, the operation engine (3) of the kitchen machine (1) further comprises a programmer module (6) configured to transmit a machine command to the adaptor module (5) of a specific kitchen equipment (4). In this regard, the adapter module (5) is comprised by processing means configured to control the operation of the respective kitchen equipment (4) according to the machine command transmitted by the programmer module (6). Said machine command is a computer program written in machine language instructions that can be executed directly by the central processing unit of a kitchen equipment (4). The machine code may be comprised by at least two instruction fields. A first field comprises an identification code for identifying univocally each adapter module (5), and a second field comprises an instruction code adapted to cause the central processing unit of the elected kitchen equipment (4) to perform a very specific task, such as setting periods of operation, temperature ranges and/or power levels.

In another embodiment of the system, the operation engine (3) is configured to program the operation of the kitchen machine hardware elements (2) ii.) to iv.) and the operation of the at least one kitchen equipment (4) connected to the communication network according to automatic cooking programs. Said automatic cooking programs are stored in a memory module of the operation engine (3) of the kitchen machine (1) and comprise at least one operative instruction for operating the kitchen machine hardware elements (2) ii.) to iv.) and at least one machine command for operating a specific kitchen equipment (4). In this way, the operation of a kitchen environment, comprised by a plurality of kitchen appliances, is centralized in the kitchen machine (1) which may influence future operative steps of kitchen equipment (4) connected to the network. For that purpose, the operation engine (3) further comprises a scheduler module (7) including processing means adapted to assigned a priority level to each operative instruction and to each machine command, based on a set of prioritization rules. The scheduler module (7) is configured to scheduler the execution of the operative instructions and of the machine commands according to the highest priority level. The prioritization rules implemented by the scheduler module (7) can be based on several metrics, such as, for example, providing a specific order for the operative instructions/machine commands so the shortest automatic cooking program's execution time could be achieved. Additionally, the prioritization rules can also be based on the periodic kitchen equipment's operative data collected from the respective adaptor module (5) or in a combination of the both criteria.

## Claims

1. System for controlling the operation of kitchen appliances comprising at least one kitchen equipment (4) and at least one kitchen machine (1) connected to said at least one kitchen equipment (4) by means of a wireless communication network; the kitchen machine (1) is electrically ran and comprises i.) a mixing cup, ii.) mixing means provided in the mixing cup, iii.) a base station suitable for coupling of the mixing cup and which thereby is able to provide motion to the mixing means and iv.) heating and/or cooling means of the mixing cup;
the system further comprises an adaptor module (5) connected to each kitchen equipment (4) programmed to collect operative data from the respective kitchen equipment (4) and to transmit said data to the kitchen machine (1); and the kitchen machine (1) further comprises an operation engine (3) configured to process operative data from at least one kitchen equipment (4) in order to control the operation of the kitchen machine (1) and the at least one kitchen equipment (4) according to automatic cooking programs; such automatic cooking programs comprise at least one operative instruction for operating the kitchen machine hardware elements (2) ii.) to iv.) and at least one machine command for operating at least one kitchen equipment (4);
**characterized in that**
the operation engine (3) further comprises a scheduler module (7) comprising processing means adapted to assign a priority level to each operative instruction and to each machine command, based on a set of prioritization rules; the scheduler module (7) being configured to schedule the execution of the operative instructions and of the machine commands according to the highest priority level.

2. System according to claim 1 wherein the operative data collected by the adaptor module (5) relates to temperature of operation and period of operation of the respective kitchen equipment (4).

3. System according to any of the previous claims, wherein
the operation engine (3) further comprises a programmer module (6) configured to transmit the machine command to the adaptor module (5) of a specific kitchen equipment (4); and
the adapter module (5) comprises processing means configured to control the operation of the respective kitchen equipment (4) according to the machine command transmitted by the programmer module (6).

4. System according to claim 3 wherein the machine command is comprised by at least two instruction fields; a first field comprises an identification code adapted to identify univocally an adapter module (5), and a second field comprises an instruction code adapted to operate the kitchen equipment (4) thereto connected.

5. System according to claim 4, wherein the instruction code is programmed to configure the following operation parameters of a kitchen equipment (4): periods of operation, temperature ranges and/or power levels.

6. System according to any of the previous claims, wherein said prioritization rules are based on the shortest automatic cooking program's execution time and/or on the kitchen equipment's operative data collected from the respective adaptor module (5).

7. System according to any of the previous claims wherein a kitchen equipment (4) is a refrigerator and/or a stove and/or a microwave and/or an oven and or a coffee machine.

8. System according to any of the previous claims wherein the wireless communication network operates based on standards of a wireless personal area network or of a wireless local network or of a wireless wide area network.

## Patentansprüche

1. System zur Steuerung des Betriebs von Küchengeräten, umfassend mindestens eine Küchenausstattung (4) und mindestens eine Küchenmaschine (1), die mit der mindestens einen Küchenausstattung (4) mittels eines drahtlosen Kommunikationsnetzwerks verbunden ist; wobei die Küchenmaschine (1) elektrisch betrieben wird und umfasst: i.) einen Mischbecher, ii.) in dem Mischbecher vorgesehene Mischmittel, iii.) eine Basisstation, die zum Ankoppeln des Mischbechers geeignet ist und die dadurch in der Lage ist, die Mischmittel in Bewegung zu versetzen, und iv.) Heiz- und/oder Kühlmittel des Mischbechers;
das System ferner ein Adaptermodul (5) umfasst, das mit jedem Küchenausstattung (4) verbunden ist und so programmiert ist, dass es Betriebsdaten von dem jeweiligen Küchenausstattung (4) erfasst und die Daten an die Küchenmaschine (1) überträgt; und die Küchenmaschine (1) ferner eine Betriebsmaschine (3) umfasst, die so konfiguriert ist, dass sie Betriebsdaten von mindestens einem Küchenausstattung (4) verarbeitet, um den Betrieb der Küchenmaschine (1) und des mindestens einen Küchenausstattung (4) gemäß automatischen Kochprogrammen zu steuern; wobei solche automatischen Kochprogramme umfassen mindestens eine operative Anweisung zum Betreiben der Küchenmaschinen-Hardwareelemente (2) ii.) bis iv.) und mindestens einen Maschinenbefehl zum Betreiben mindestens eines Küchenausstattung (4);
**dadurch gekennzeichnet, dass**
die Betriebsmaschine (3) ferner ein Scheduler-Modul (7) umfasst, das Verarbeitungsmittel umfasst, die angepasst sind, um jeder operativen Anweisung und jedem Maschinenbefehl auf der Grundlage eines Satzes von Prioritätsregeln eine Prioritätsstufe zuzuweisen; wobei das Scheduler-Modul (7) so konfiguriert ist, dass es die Ausführung der operativen Anweisungen und der Maschinenbefehle entsprechend der höchsten Prioritätsstufe plant.

2. System nach Anspruch 1, wobei sich die vom Adaptermodul (5) erfassten Betriebsdaten auf die Betriebstemperatur und die Betriebsdauer der jeweiligen Küchenausstattung (4) beziehen.

3. System nach einem der vorhergehenden Ansprüche, wobei
die Betriebsmaschine (3) außerdem ein Programmiermodul (6) umfasst, das so konfiguriert ist, dass es den Maschinenbefehl an das Adaptermodul (5) einer bestimmten Küchenausstattung (4) überträgt; und
das Adaptermodul (5) Verarbeitungsmittel umfasst, die so konfiguriert sind, dass sie den Betrieb der jeweiligen Küchenausstattung (4) entsprechend dem vom Programmiermodul (6) übertragenen Maschinenbefehl steuern.

4. System nach Anspruch 3, wobei der Maschinenbefehl aus mindestens zwei Befehlsfeldern besteht; ein erstes Feld umfasst einen Identifikationscode, der dazu geeignet ist, ein Adaptermodul (5) eindeutig zu identifizieren, und ein zweites Feld umfasst einen Befehlscode, der dazu geeignet ist, die daran angeschlossene Küchenausstattung (4) zu bedienen.

5. System nach Anspruch 4, wobei der Befehlscode so programmiert ist, dass er die folgenden Betriebsparameter eines Küchenausstattung (4) konfiguriert: Betriebsdauern, Temperaturbereiche und/oder Leistungsstufen.

6. System nach einem der vorhergehenden Ansprüche, wobei die Prioritätsregeln auf der kürzesten Ausführungszeit des automatischen Kochprogramms und/oder auf den vom jeweiligen Adaptermodul (5) gesammelten Betriebsdaten der Küchenausstattung basieren.

7. System nach einem der vorhergehenden Ansprüche, wobei eine Küchenausstattung (4) ein Kühlschrank und/oder ein Herd und/oder eine Mikrowelle und/oder ein Backofen und/oder eine Kaffeemaschine ist.

8. System nach einem der vorhergehenden Ansprüche, wobei das drahtlose Kommunikationsnetzwerk auf der Grundlage von Standards eines drahtlosen persönlichen Netzwerks oder eines drahtlosen lokalen Netzwerks oder eines drahtlosen Weitverkehrsnetzwerks arbeitet.

## Revendications

1. Système pour contrôler l'opération des appareils de cuisine comprenant au moins un équipement de cuisine (4) et au moins un robot de cuisine (1) connectée audit au moins un équipement de cuisine (4) au moyen d'un réseau de communication sans fil ; le robot de cuisine (1) fonctionne électriquement et comprend i.) un bol de mélange, ii.) des moyens de mélange prévus dans le bol de mélange, iii.) une station de base adaptée au couplage du bol de mélange et qui peut ainsi fournir un mouvement aux moyens de mélange et iv.) des moyens de chauffage et/ou de refroidissement du bol de mélange ;
le système comprend en outre un module adaptateur (5) connecté à chaque équipement de cuisine (4) programmé pour recueillir les données opérationnelles de l'équipement de cuisine respectif (4) et pour transmettre ces données au robot de cuisine (1) ; et le robot de cuisine (1) comprend en outre un moteur d'opération (3) configuré pour traiter les données opérationnelles d'au moins un équipement de cuisine (4) afin de contrôler le fonctionnement du robot de cuisine (1) et du au moins un équipement de cuisine (4) conformément aux programmes de cuisson automatique ; ces programmes de cuisson automatique comprennent au moins une instruction d'opération pour opérer les éléments matériels du robot de cuisine (2) ii. ) à iv.) et au moins une commande de machine pour opérer au moins un équipement de cuisine (4) ;
**caractérisé en ce que**
le moteur d'opération (3) comprend en outre un module de programmation (7) comprenant des moyens de traitement adaptés pour attribuer un niveau de priorité à chaque instruction opérationnelle et à chaque commande de machine, sur la base d'un ensemble de règles de priorité ; le module de programmation (7) est configuré pour programmer l'exécution des instructions opérationnelles et des commandes de machine en fonction du niveau de priorité le plus élevé.

2. Système selon la revendication 1, dans lequel les données opérationnelles recueillies par le module adaptateur (5) se rapportent à la température d'opération et à la période d'opération de l'équipement de cuisine (4) respectif.

3. Système selon l'une quelconque des revendications précédentes, dans lequel
le moteur d'opération (3) comprend en outre un module programmateur (6) configuré pour transmettre la commande de machine au module adaptateur (5) d'un équipement de cuisine spécifique (4) ; et
le module adaptateur (5) comprend des moyens de traitement configurés pour commander l'opération de l'équipement de cuisine (4) respectif en fonction de la commande de machine transmise par le module programmateur (6).

4. Système selon la revendication 3, dans lequel la commande de machine comprend au moins deux champs d'instructions; un premier champ comprend un code d'identification adapté à l'identification univoque d'un module adaptateur (5), et un second champ comprend un code d'instructions adapté à l'opération de l'équipement de cuisine (4) qui y est connecté.

5. Système selon la revendication 4, dans lequel le code d'instructions est programmé pour configurer les paramètres d'opération suivants d'un équipement de cuisine (4) : périodes d'opération, plages de température et/ou niveaux de puissance.

6. Système selon l'une quelconque des revendications précédentes, dans lequel les règles de priorité sont basées sur le temps d'exécution du programme de cuisson automatique le plus court et/ou sur les données opérationnelles de l'équipement de cuisine recueillies à partir du module adaptateur (5) respectif.

7. Système selon l'une quelconque des revendications précédentes, dans lequel l'équipement de cuisine (4) est un réfrigérateur et/ou une cuisinière et/ou un four à micro-ondes et/ou un four et/ou une machine à café.

8. Système selon l'une quelconque des revendications précédentes, dans lequel le réseau de communication sans fil opère selon les normes d'un réseau personnel sans fil, d'un réseau local sans fil ou d'un réseau étendu sans fil.
